# EUROPEAN PATENT APPLICATION

(11) **EP 2 111 019 A1**
(43) Date of publication of application: **21.10.2009**
(21) Application number: 08290377.4
(22) Date of filing: 17.04.2008
(51) Int. Cl.: H04L 29/08

(54) **Roaming method**

(71) Applicant: Alcatel Lucent, 75008 Paris (FR)
(72) Inventor: Chakri, Al Mahdi, c/o Alcatel Lucent, 75008 Paris (FR); Conte, Alberto, c/o Alcatel Lucent, 75008 Paris (FR)
(74) Representative: Demulsant, Xavier

(57) **Abstract**

A roaming method allowing access to home network and a visited network, the user profile and the roaming agreement allowing the user to have internet services from the two networks, said method comprising:
- receiving IP packet from a user terminal;
- sending the user profile to the visited network (4), this profile containing packet data flow identifier;
- detection, by the foreign agent (3) of the visited network, that the IP packet is from an application provided by the home network (2) or the visited network (4);
- if the packet (5) is from an application provided by the home network (2), sending the packet (5) to a home agent (6) located in the home network (2);
- if the packet (5) is from an application provided by the visited network (4), translating the source address of the packet (5) and sending the packet to his destination.

## Description

### FIELD OF THE INVENTION

The invention relates on network roaming.

### BACKGROUND OF THE INVENTION

Network technologies are traditionally based on wireline solutions. Wireless data networks can be categorized according to their coverage areas. *Wireless Local Area Networks* (*WLANs*) are designed to provide wireless access in areas with cell radius up to hundred meters and are used mostly in home and office environments. *Wireless Metropolitan Area Networks* (*WMANs*) cover wider areas, generally as large as entire cities. *Wireless Wide Area Networks* (*WWANs*) are designed for areas larger than a single city. Different network standards are designed for each of these categories. However, some of these standards fit into several of these categories.

As of today, WLAN is the most widely deployed wireless technology. The most notable WLAN standard is IEEE 802.11 family. Another WLAN standard is the HiperLAN family by ETSI. These two technologies are united under the *Wireless Fidelity* (*WiFi*) alliance. However, for the moment, the terms IEEE 802.11 and WiFi are used interchangeably in the literature. Both technologies serve a local area with a radius of 50-100 m at most. A typical WLAN network consists of an *Access Point* (*AP*) in the center and *Stations* (*STAs*) connected to this AP. Communication to/from a STA is always carried over the AP. There is also a decentralized working mode of WLAN, in which all STAs can talk to each other directly in an ad-hoc fashion. While WiFi initially provided an aggregate throughput of 11 Mbps (per AP), the current standard provides a throughput of 54 Mbps. With the emerging IEEE 802.11n standard, WiFi is expected to standardize these improvements and provide throughput values up to 540 Mbps.

IEEE 802.11 is developed as the wireless counterpart of Ethernet. Since mobile user profiles are not defined in the original standard, seamless transition between WLAN cells cannot be accomplished. The upcoming IEEE 802.11s standard addresses the issue of intra-AP communication, but it does not provide a solution for roaming users either. The Cellular IP architecture provides a solution for seamless transition between different WLANs. In this architecture, several WLAN cells are connected to the Internet and each other by a single gateway. This gateway keeps record of routing paths to all STAs in the network. In the case a STA changes its serving AP, a new path is established between the gateway and the STA.

While not as widely deployed as WLAN, WMAN networks are expected to be deployed in the next future. IEEE developed IEEE 802.16 standard to provide *Broadband Wireless Access* (*BWA*) to fixed *Line of Sight (LOS) Subscriber Stations* (*SSs*) from a *Base Station* (*BS*). IEEE 802.16 is a cell based technology, in which multiple cells are used to cover urban areas. Average throughput of a IEEE 802.16 cell is expected to be between 75 and 100 Mbps. On the other hand, ETSI established the *Broadband Radio Access Networks* (*BRANs*) project in 1997 to develop standards that provide broadband radio access to business and residential users. Two different WMAN standards are introduced under the BRAN project as of today; HiperACCESS for LOS and HiperMAN for both LOS and NLOS user support.

IEEE 802.16 defines two basic operational modes: point to multipoint and mesh. An important feature of the 802.16 is that it is connection oriented. In other words, a subscriber station must register with the base station before it can start to send or receive data.

While WLANs provide indoor and hotspot coverage, they can be connected to the Internet via WMAN technologies. In the basic setting of a WMAN, there are two types of devices in the network; the BS and the subscribers. This type of connectivity represents a *Point-to-Multipoint* (*PMP*) network. Subscribers can be either buildings (for fixed access), or pedestrians and vehicles (for mobile access). In rural environments, each subscriber usually has LOS connection with the BS. However, in urban areas subscribers are connected to the BS in a NLOS manner. Since high frequency signals must have LOS connectivity to give acceptable service performance, WMANs do not work well at very high frequencies for urban settings. Generally, the transmission of a subscriber consists of the aggregate transmissions of local users. Thus, WMANs integrate similar types of transmissions (e.g., transmissions with similar QoS constraints) originating from different users in the LAN into a single connection.

Companies developing products for WMAN networks have formed a forum named *Worldwide Interoperability for Microwave Access* (WiMAX). Similar to the WiFi alliance, WiMAX Forum aims overcoming interoperability problems between devices from different companies. In addition to IEEE 802.16, WiMAX Forum also supports ETSI HiperMAN standard.

There are several ways in which WiMAX can be deployed. The most popular provides backhaul for Wi-Fi access points, and it also serves as a backhaul between conventional cellular towers. The second type of deployment serves residential and enterprises users as an alternative to cable and DSL. Ratified recently, a mobile version is based on 802.16e standard.

In current wireless networks, when a user is roaming from his home network to a visited network, he can either have services provided by his home network (e.g. GPRS roaming) or by the visited network (e.g. WiFi roaming) depending on where the user data path is anchored.

In the first case (GPRS roaming use case) if the user wants to browse internet his traffic has to go back all the way to his home network which is not optimal at all.

Additionally, if there are some visited network services that are only accessible in the visited network (e.g. local television) the user cannot have them because all his traffic is routed back to his home network.

In the second use case (WiFi roaming use case) the user can only have access to the visited network services. Thus, no access to home intranet is possible nor other services that are only accessible from the home network.

To allow the user to have simultaneous access to home and visited services in the same time, one possible solution is to assign two IP addresses to the terminal. One IP address is anchored in the Visited Network and the other is anchored in the Home Network. The terminal decides then on which application going to be provided by the home or the visited network. Then terminal constructs the IP packet with one of the two IP addresses.

The major drawback of this solution is that the terminal must have enough intelligence to associate the right application to the right network interface (right IP address).

For instance if the roamers terminal decide to have internet service from the visited network and his local television from his home network, the terminal must have enough intelligence to link the application or the service to the right IP address in order that it can be routed properly to the home or to the visited network.

This implies a lot of complexity in the terminal, such terminal not being available today.

There is a need for a roaming system and method allowing roamers to have simultaneous access to home and visited networks services in a simple manner and without adding complexity in the terminal.

### SUMMARY OF THE INVENTION

To this end, the invention relates, according to a first aspect, to a roaming method allowing access to home network and a visited network, the user profile and the roaming agreement allowing the user to have internet services from the two networks, said method comprising:
receiving IP packet from a user terminal;
sending the user profile to the visited network, this profile containing packet data flow identifier;
detection, by the foreign agent of the visited network, that the IP packet is from an application provided by the home network or the visited network;
if the packet is from an application provided by the home network, sending the packet to a home agent located in the home network;
if the packet is from an application provided by the visited network, translating the source address of the packet and sending the packet to his destination.

In a possible embodiment, the foreign agent translates the source address of the packet using NAT/PAT (Network Address Translation /Port Address Translation).

The invention relates, according to a second aspect, to a computer program product comprising a code sequence which, when executed by a processor in a mobile device, carries out the following steps:
receiving IP packet from a user terminal;
sending the user profile to the visited network, this profile containing packet data flow identifier;
detecting that the IP packet is from an application provided by the home network or the visited network;
if the packet is from an application provided by the home network, sending the packet to a home agent located in the home network;
if the packet is from an application provided by the visited network, translating the source address of the packet and sending the packet to his destination.

In a possible embodiment, the foreign agent translates the source address of the packet using NAT/PAT (Network Address Translation /Port Address Translation).

The invention relates, according to a third aspect, to a communications system comprising a management server having:
means for receiving IP packet from a user terminal;
means for sending the user profile to the visited network, this profile containing packet data flow identifier;
means for detecting that the IP packet is from an application provided by the home network or the visited network;
if the packet is from an application provided by the home network, means for sending the packet to a home agent located in the home network;
if the packet is from an application provided by the visited network, means for translating the source address of the packet and sending the packet to his destination.

The above and other objects and advantages of the invention will become apparent from the detailed description of preferred embodiments, considered in conjunction with the accompanying drawings.

### BRIEF DESCRIPTION OF THE DRAWINGS

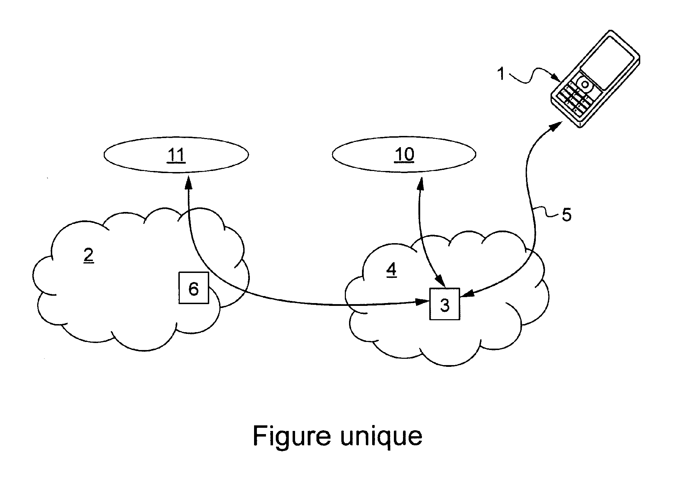

FIG. 1 is a schematic view of a roaming process.

### DESCRIPTION OF PREFERRED EMBODIMENTS

The following description is made based on a WiMAX user roaming from his home network H-NSP (*Home Network Service Provider*) to a visited network V-NSP (*Visited Network Service Provider*)*.*

For example, the user profile and the roaming agreements between the two networks 2, 4 allow the user to have internet service 10 from the visited network 4 and home services 11 (e.g. VoIP or private intranet) from his home network 2.

The terminal 1 has one single address assigned by the home network 2. This address is called Home Address, HoA.

When the foreign agent 3 located in the visited network 4 receives a packet 5 from the terminal 1, it knows where to route it based on some indication put in the packet.

During the authentication, the H-AAA (*Home Authentication, Authorization and Accounting*) server sends the user profile to the visited network 4 in the ASN-GW/FA (*Access Services Network, Gate Way*/*Foreign Agent*).

This profile contains the packet data flows that have to be created as well as the indication to provide them from the home network 2 or the visited network 4. This profile contains the PFID (*Packet Data Flow Identifier*) that are used for packet data flow accounting.

The visited network 4 creates then the packet data flow and an IP address is assigned by the home network 2 to the terminal 1, using Mobile IP procedure with an FA (*Foreign Agent*) in the visited network 4 and HA (*Home Agent*) in the home network 2.

When the user tries to begin internet browsing, the IP packets are sent to the ASN-GW/FA.

Based on the PDFID, the ASN-GW/FA detects that these IP packets corresponds to the internet session. Then, the ASN-GW/FA translates the source IP address (and potentially the ports numbers) and routes them to destination. The modified source address is set to a one "pointing" to the ASN-GW/FA itself.

On the other hand when the user initiates services that have to be provided by the home network, the foreign agent 3 detects (again based on the PDFID) that these packets 5 corresponds to a service 11 provided by the home network 2 and then forwards them to the home agent 6 in the home network 2 (without any address/port translation)

On figure 1, the data paths of the services 11 provided by the home network 2 and services 10 provided by the visited network 4 are represented.

The routing decision to the home network 2 or to the visited network 4 is made in the network and not in the terminal 1. The routing decision is to be taken based on some indication of the service type.

If the packet 5 is from an application provided by the home network 2, the foreign agent 3 sends the packet 5 to the home agent 6 located in the home network 2.

If the packet 5 is from an application provided by the visited network 4, the foreign agent 3 translates the source address of the packet 5 using NAT/PAT (Network Address Translation / Port Address Translation). Then the foreign agent 3 sends the packet directly to his destination.

## Claims

1. A roaming method allowing access to home network and a visited network, the user profile and the roaming agreement allowing the user to have internet services from the two networks, said method comprising:
- receiving IP packet from a user terminal;
- sending the user profile to the visited network (4), this profile containing packet data flow identifier;
- detection, by the foreign agent (3) of the visited network, that the IP packet is from an application provided by the home network (2) or the visited network (4);
- if the packet (5) is from an application provided by the home network (2), sending the packet (5) to a home agent (6) located in the home network (2);
- if the packet (5) is from an application provided by the visited network (4), translating the source address of the packet (5) and sending the packet to his destination.

2. A roaming method according to claim 1, wherein the foreign agent (3) translates the source address of the packet (5) using NAT/PAT (Network Address Translation / Port Address Translation).

3. A computer program product comprising a code sequence which, when executed by a processor in a mobile device, carries out the following steps:
- receiving IP packet from a user terminal;
- sending the user profile to the visited network (4), this profile containing packet data flow identifier;
- detecting that the IP packet is from an application provided by the home network (2) or the visited network (4);
- if the packet (5) is from an application provided by the home network (2), sending the packet (5) to a home agent (6) located in the home network (2);
- if the packet (5) is from an application provided by the visited network (4), translating the source address of the packet (5) and sending the packet to his destination.

4. A computer program product according to claim 3, wherein the foreign agent (3) translates the source address of the packet (5) using NAT/PAT (Network Address Translation / Port Address Translation).

5. A communications system comprising a management server having:
- means for receiving IP packet from a user terminal;
- means for sending the user profile to the visited network (4), this profile containing packet data flow identifier;
- means for detecting that the IP packet is from an application provided by the home network (2) or the visited network (4);
- if the packet (5) is from an application provided by the home network (2), means for sending the packet (5) to a home agent (6) located in the home network (2);
- if the packet (5) is from an application provided by the visited network (4), means for translating the source address of the packet (5) and sending the packet to his destination.
